# EUROPÄISCHE PATENTANMELDUNG

(11) **EP 1 839 617 A1**
(43) Veröffentlichungstag der Anmeldung: **03.10.2007**
(21) Anmeldenummer: 07090060.0
(22) Anmeldetag: 27.03.2007
(51) Int. Cl.: A61C 8/00

(54) **Schraubimplantat**

(30) Priorität: 28.03.2006 DE 202006005321 U; 24.05.2006 DE 202006008702 U; 27.06.2006 DE 202006010202 U
(71) Anmelder: Biomed Est., 9490 Vaduz (LI)
(72) Erfinder: Ihde, Dr. Stefan, 8738 Uetliburg (CH)
(74) Vertreter: Radwer, Dieter

(57) **Zusammenfassung**

Die Erfindung betrifft ein enossales Schraubimplantat, das als Implantatbasis cortical in den Kieferknochen eingesetzt wird und zur Aufnahme und Befestigung des Aufbauteiles eines Zahnersatzes oder einer Subkonstruktion dient.

Trotz vielfältiger Verbesserung und Weiterentwicklungen ist das Bruchrisiko bei enossalen einstückig ausgebildeten Schraubimplantaten im Bereich des Implantatkopfes nach wie vor sehr hoch. Bricht das Implantat bereits in der Endphase der Insertion ist es äußerst schwierig und aufwendig, das gebrochene und relativ fest und tief inserierte Implantat wieder zu entfernen.

Die Erfindung behebt diesen Nachteil indem im Abutmentkopf 3 eine Sollbruchstelle 4 vorgesehen ist. Darüber hinaus schlägt die Erfindung Lösungen vor, mit denen die Anpassung des inserierten Implantats an die natürlichen Zahnstellungen erleichtert und die Gefahr von Lockerungen des inserierten Implantats im Kieferknochen reduziert werden kann - Fig. 1.

## Beschreibung

Die Erfindung betrifft ein weiter verbessertes enossales Schraubimplantat, das als Implantatbasis cortical in den Kieferknochen eingesetzt wird und kopfseitig einen Halsbereich mit einer Biegezone aufweist, an die sich ein Abutment zur Aufnahme und Befestigung des Aufbauteiles eines Zahnersatzes oder einer Subkonstruktion anschließt.

Trotz größter Sorgfalt bei der Insertion der Basisteile eines Implantates in den Kieferknochen lassen sich im Rahmen der prothetischen Endversorgung nachfolgende Anpassungen nicht umgehen, um die notwendige korrekte Zahnstellung zu erreichen. Sofern der in das Basisteil einzusetzende weitere Implantataufbau nicht bereits konstruktiv mit Mitteln ausgestattet ist, die eine nachfolgende Korrektur bzw. Anpassung an die richtige Zahnstellung ermöglichen - DE 41 27 839 A1, besitzen insbesondere einteilig ausgebildete Schraubimplantate - EP 1 468 658 A1, DE 203 06 008 U1, DE 39 18 309 C2 - aber auch mehrteilige, enossale Implantate - US 4 645 435 - biegbare Abschnitte bzw. Biegezonen, die die vorzunehmenden Anpassungen erleichtern. Diese biegbaren Abschnitte sind im Kopfbereich des Implantates unterhalb eines Zementierpfostens oder eines Abutments vorgesehen und werden durch Einschnürungen mit einem reduzierten Profilquerschnitt gebildet.

Die derart ausgebildeten biegbaren Abschnitte ermöglichen in vorteilhafter Weise eine Ausrichtung des Implantatkopfes mit dem Zementierpfosten oder dem Abutment gegenüber dem im Kieferknochen inserierten Teil des Implantates. Sie haben aber den Nachteil, dass auch bei größter Sorgfalt bei den vorzunehmenden Biegevorgängen das Bruchrisiko aufgrund des reduzierten Profilquerschnittes im Halsbereich hoch ist.

Ein hohes Bruchrisiko besteht aber auch in der Endphase der Insertion, wenn das Implantat bereits relativ tief im Kieferknochen positioniert ist, aber seine Endstellung noch nicht erreicht hat und zum Erreichen dieser Endposition ein erhöhtes Drehmoment für das weitere Eindrehen des Schraubimplantates in den Kieferknochen aufgebracht werden muss. Diese hohe Bruchgefahr besteht vornehmlich dann, wenn das Implantatbett unzureichend aufbereitet worden ist. Nach einem Bruch im biegbaren Halsbereich ist es äußerst schwierig und aufwendig, das gebrochene und relativ fest und tief inserierte Implantat wieder zu entfernen. Das gebrochene Implantat muss aber entfernt werden, um das Implantatbett neu aufbereiten zu können und ein neues oder ein anderes Implantat einzusetzen.

Ein weiteres Problem ist der Erhalt der Stabilität von enossalen Implantaten gegenüber dem Knochen, in den sie eingebracht worden sind. So werden sowohl in der orthopädischen Chirurgie, als auch in der zahnärztlichen und maxillo facialen Implantologie immer wieder Lockerungen von Implantaten beobachtet. Ein gewisser Teil dieser Lockerungen ist dabei auf Infektionen zurückzuführen. Ein Großteil der Lockerungen hat als Ursache jedoch die Überlastung des periimplantären Knochens. So lockern sich bei Knochenbruchplatten die am meisten belasteten Schrauben bzw. die Schrauben, die in den am wenigsten mineralisierten Bereichen positioniert sind, beispielsweise in Zugbereichen oder Flexionsbereichen des Knochens.

Die bisher bekannten Maßnahmen, mit denen diese unerwünschten Prozesse eingeschränkt oder verhindert werden sollen, bestehen darin, die Knochenneubildung im knöchernen Operationsgebiet zu fördern. So wurde unter anderem vorgeschlagen, durch Beschichtungen der Implantatoberfläche mit knochenfördernden Substanzen die Neubildung von Knochengewebe zu beschleunigen und zu stimulieren.

Derartige Verfahren und Vorschläge sind beispielsweise aus DE 600 19 752 T2, DE 196 30 034 A1 und DE 196 28 464 A1 bekannt und beziehen sich überwiegend auf die verbesserte Bereitstellung von Substraten für den Knochenaufbau, wie beispielsweise Tricalciumphosphat, Hydrohylapatit, Ca- und P-Verbindungen aller Art.

Um die Bildung von neuem Knochengewebe zu beschleunigen und zu stimulieren, wurden ferner Maßnahmen zur verbesserten Versorgung des Knochens mit Blut getroffen und schließlich die vermehrte Bereitstellung von Wachstumshormonen und Peptiden aller Art, die den Knochenaufbau beschleunigen, vorgeschlagen.

Alle diese Bemühungen haben bisher nicht zu einem wirklich nutzbaren klinisch guten Ergebnis geführt und hatten in der Praxis keinen durchschlagenden Erfolg, da es mehrere Wochen bis Monate dauert, bis der neu gebildete Knochen auch wirklich mineralisiert und tragfähig geworden ist. Die erwähnten Lockerungen von Implantaten treten jedoch weitaus früher auf.

Der Erfindung liegt daher die Aufgabe zugrunde, die Nachteile, die mit einem Bruch des Schraubimplantats im Kopf- und Halsbereich verbunden sind, bei gleichzeitiger Verbesserung der Biegbarkeit im Halsbereich des Implantates, zu beseitigen und durch eine geeignete Beschichtung eine mikrotherapeutische Reduktion der osteonalen Aktivität hervorzurufen, um auf diese Weise eine Destabilisierung des inserierten Implantats zu verhindern.

Erfindungsgemäß wird die Aufgabe durch ein Implantat mit den Merkmalen nach Anspruch 1 gelöst. Vorteilhafte Weiterbildungen der Erfindung ergeben sich aus den Unteransprüchen 2 bis 23.

Gegenüber den bisher bekannten Lösungen besitzt das einstückig ausgebildete und vorzugsweise mit einem Abutment ausgestattete, erfindungsgemäße Schraubimplantat im Bereich des Abutmentkopfes eine Sollbruchstelle, wobei der Durchmesser des Profilquerschnittes in dieser Sollbruchstelle geringfügig kleiner ist als der kleinste Durchmesser im Bereich des biegbaren Halsabschnittes mit reduziertem Profilquerschnitt, der bevorzugt ein elliptisches oder stegförmiges Profil besitzt. Die Längsachse des gewählten Profils bildet die bevorzugte, festgelegte Biegelinie und ist vorteilhafter Weise durch eine Markierung auf der Kopffläche des Implantates gekennzeichnet.

Treten beim Einsetzen des Implantates in das vorbereitete Implantatbett aus den unterschiedlichsten Gründen höhere Drehmomente auf, die zu einem Bruch des Implantates im Bereich des biegbaren Halsabschnittes führen könnten, so wird dieser Bruch durch die erfindungsgemäße Ausbildung des Implantates nicht im Bereich des biegbaren Halsabschnittes, mit den sich daraus ergebenden Nachteilen, sondern an der Sollbruchstelle erfolgen, deren Profilquerschnitt kleiner als im Bereich des biegbaren Halsabschnittes ist.

Um ein während des Insertionsprozesses im Bereich der Sollbruchstelle gebrochenes Implantat, das bereits relativ fest im Kieferknochen eingedreht ist, möglichst ohne zusätzliche Aufwendungen und auf einfache Weise zu entfernen, sind unterhalb der Sollbruchstelle weitere Schlüsselflächen für die Aufnahme eines geeigneten Werkzeuges zum Ausdrehen des gebrochenen Implantates vorgesehen. Zweckmäßiger Weise werden die Schlüsselflächen, die sich von der Kopffläche des Abutments in Richtung des Implantatfußes erstrecken, weitergeführt, so dass sie zwischen der Sollbruchstelle und dem biegbaren Halsabschnitt des Implantates enden.

Der biegbare Halsabschnitt des Implantats besitzt vorzugsweise eine Biegezone mit einer im voraus festgelegten, bevorzugten Biegelinie, die auf der Kopffläche des Abutments oder des Zementierpfostens durch eine Markierung gekennzeichnet ist und durch den Profilquerschnitt in der Biegezone bestimmt wird. Der Profilquerschnitt ist vorzugsweise elliptisch oder stegförmig, wobei die Längsachse des gewählten Profils die bevorzugte, festgelegte Biegelinie bildet.

Auf diese Weise wird mit relativ einfachen Mitteln der für vorzunehmende Biegemaßnahmen bei der Anpassung der Zahnstellung relevante Profilquerschnitt im Halsbereich erhöht und damit die Bruchgefahr weiter reduziert. Gleichzeitig wird durch Kennzeichnung der bevorzugten, festgelegten Biegelinie auf der Kopffläche des Implantates die genaue Positionierung des Implantates bei der Insertion erleichtert und auch nach dem Einheilen gut sichtbar dargestellt, in welche Richtung der Implantatkopf mit dem Abutment oder einem Zementierpfosten bevorzugt gebogen werden kann, um die notwendigen Anpassungen für eine exakte Zahnstellung vorzunehmen.

Im Gegensatz zu den bisher bekannten Lösungen, die zur Stabilisierung von enossalen Implantaten Substanzen verwenden, die ausnahmslos die Bildung von neuem Knochengewebe beschleunigen und stimulieren, beschreitet die erfindungsgemäße Lösung einen grundsätzlich anderen Weg und verwendet für die Beschichtung der Implantate Substanzen, die die innere Neubildung von Knochen, das sogenannte Remodelling, zeitlich und örtlichbegrenzt behindern oder unterbinden.

Solche Substanzen werden beispielsweise für die Behandlung der Osteoporose eingesetzt, wenn es darauf ankommt, den Remodelling bedingten Knochenabbau zu verzögern. Diese Substanzen beeinflussen die Aktivität der sogenannten Osteoklasten. Sie reduzieren die Aktivität der Osteoklasten, den knochenabbauenden Zellen, deren Vermehrung oder deren Beweglichkeit (Motilität) im Knochen. Nach dem Stand der Technik werden diese Substanzen bei allgemeinmedizinischen Problemen (z.B. bei Osteoporose) oral oder parenteral zugeführt.

Für den implantologischen Bereich haben diese Substanzen, wenn sie auf diese Weise verabreicht werden, jedoch erhebliche unerwünschte Wirkungen. So können bei Implantatpatienten, beispielsweise bei Patienten, die enossale Zahnimplantate oder chirurgisch-orthopädische Implantate erhalten, schwerste Entzündungen nach der Implantation auftreten. Die berüchtigte Osteomyelitis (Knochenmarksentzündung) und die Osteonekrose, das Absterben von Knochen ohne Einwirkung von Bakterien, sind die gefürchtetsten Komplikationen. Aus diesen Gründen gelten Implantationen bei Patienten, die solche Substanzen aus allgemeinmedizinischen Gründen zu sich nehmen, heute als sehr riskant und annähernd als kontraindiziert. Der Grund hierfür ist recht einfach: Durch die reduzierte Aktivität der Osteoklasten wird der Knochen weniger durchbaut. In der Summe wird er stärker mineralisiert und es fehlt die für die Abwehr wichtige Blutversorgung. Wird ein solchermaßen geschädigter Knochen nun einer Operation ausgesetzt, so kann es, - ungewollt-, zum Eindringen von Bakterien in das knöcherne Operationsgebiet kommen. Diese Bakterien können dann vom körpereigenen Immunsystem mangels ausreichender Blutversorgung nicht mehr abgewehrt werden und können sich ausbreiten.

Gleichermaßen können auch ganze Knochenbezirke unter der Therapie mit Substanzen, die das osteonale Remodelling behindern oder verhindern, absterben. Dies oft unbemerkt, weil ja auch abgestorbener Knochen weiterhin lange Zeit seine strukturelle Integrität besitzt und die Aufgabe der Kraftübertragung und der Darstellung einer morphologischen Baueinheit auch im abgestorbenen Zustand wahrnehmen kann.

Andererseits bricht jedoch überlasteter Knochen, in dem sich zu den Mikroschäden, die aus dem Gebrauch von Substanzen, die das osteonale Remodelling behindern oder verhindern, resultieren, auch noch die im Hinblick auf die strukturelle Integrität schädlichen Reparaturschäden addieren, bereits nach ca. 6 Wochen.

In kontrollierten, histologischen Untersuchungen, die der Erfindung zugrunde liegen, hat sich jedoch gezeigt, dass die schweren Nebenwirkungen der Substanzen, die das osteonale System an der Bildung und seiner Funktion behindern, für den implantologischen Bereich dadurch umgangen werden können, wenn diese Substanzen nicht oral oder parenteral, sondern im Rahmen der eigentlichen Operation lokal, quasi mikrotherapeutisch, zugeführt werden. Eine vorteilhafte Applikationsform ist eine Beschichtung des Implantats mit der wirksamen Substanz. Da viele Implantatoberflächen ohnehin eine bestimmte Rauhigkeit aufweisen, ist das Aufbringen einer solchen Beschichtung kein Problem.

Es hat sich zudem gezeigt, dass sowohl fettlösliche als auch wasserlösliche Substanzen gleichermaßen gut zur Anwendung kommen können. Somit können eine breite Anzahl von Substanzen für die erfindungsgemäße Lösung eingesetzt werden: Neben den Biphosphonaten, namentlich Etidronat, Clodronate, Tiludronat, Pamidronat, Alendronat, Risedroant, Ibandronat, Zoledronat, sind auch Östrogene, TGF-beta, Galluim-Nitrat, Plicamycin, Calcitriol, Calcetonin, Bafilomycin als Wirkstoffe, für die erfindungsgemäße Implantatbeschichtung geeignet.

Auf der Suche nach Substanzen, die im implantologischen Bereich zur Reduktion der osteonalen Aktivität in der Nähe von Implantaten angewendet werden können und nicht giftig sind, wurde gefunden, dass bereits eine dünne Beschichtung mit reinem Kochsalz eine lokal hemmende Wirkung auf die osteoklastische Aktivität im Rahmen des Remodellings hat. Eine solche Beschichtung kann erzeugt werden, indem die Implantate, mit möglichst aufgerauhter Oberfläche an den Teilen, die durch Osseointegration im Kieferknochen eingebunden sind, am Ende des Reinigungsvorganges in eine physiologisch, verträgliche Kochsalzlösung von mindestens 0.9 % eingetaucht und dann vorsichtig abgetrocknet werden. Auf diese Weise verbleibt eine dünne Schicht von reinem Kochsalz auf der Oberfläche. Während der Insertion des Implantats und danach löst sich diese Schicht in der Flüssigkeit und im lokal vorliegenden Blut auf. So entsteht ein Ort höherer Salzkonzentration in dem Knochen, der das Implantat begrenzt. Diese Konzentration beeinflusst das Remodelling, wie die histologischen Untersuchungen zeigten. Es aber reicht nicht, wenn nur die übliche, physiologische Kochsalzlösung vorliegt: Die Konzentrationen im umgebenden Knochen müssen weit höher sein als die, die im Blut physiologischer Weise vorliegen.
Gleiches gilt auch für eine dünne, lösliche Beschichtung mit CaPa, CaSO4 und anderen Knochensubstrat-Substanzen, die eine ähnliche Wirkung wie Kochsalz haben. Entscheidend ist die massive lokale Erhöhung der Konzentration dieser Substanzen und die rasche Löslichkeit der Substanzen. Sie dürfen also nicht fest auf der Oberfläche der Implantate haften, wie beispielsweise bei älteren permanent konzipierten CaP - Beschichtungen oder früheren Hydroxylapatit - Beschichtungen, sondern müssen leicht in die angrenzenden osteonalen Systeme hinein diffundieren können.

Besonders günstige Eigenschaften zeigt auch kolloidal aufgebrachtes reines Silber, beispielsweise in einer Partikelgröße von 0,0001 - 0.01 Mikron). Von dieser Substanz ist bereits bekannt, dass sie auf die bakterielle Besiedlung hemmend wirkt. Es hat sich jedoch gezeigt, dass auch die in osteonalen Systemen vorkommenden Zellen durch Silber gehemmt werden. Eine besonders günstige Wirkung zeigen dabei Konzentrationen zwischen 10 PPM und 1500 PPM.

Wird mit Hilfe der vorgenannten Substanzen also eine hohe lonen- bzw. eine hohe Partikelkonzentration um das Implantat erzeugt, so kann das Remodelling für eine gewisse Zeit unterbunden werden und zwar so lange, bis die Implantate beispielsweise durch die Prothetik (orthopädisch) geschient werden. Wählt man zur Erzielung des erfindungsgemäßen Effekts ungiftige, abbaubare oder zumindest lösliche Substanzen, so können diese später leicht abgebaut werden, womit der dauerhafte osteopetrotische Effekt wegfällt und der periimplantäre Knochen sich mit der Zeit normal regeneriert. Kolloidales Silber kann beispielsweise durch das später einsetzende osteonale Remodelling aufgegriffen und nach subperiostal oder endostal fortbewegt werden, wo es dann zur endgültigen Resorption und später zur problemlosen enteralen Ausscheidung kommt.

Als Resultat der erfindungsgemäßen Beschichtung liegt nahe der enossalen Implantatoberfläche eine Situation vor, bei der der Knochen räumlich und zeitlich begrenzt annähernd keinerlei Reparaturanzeichen zeigt. Somit bleiben die Implantate postoperativ auch länger stabil.

Mit der Zeit sinkt schon durch einfache Diffusion die Konzentration der für die erfindungsgemäße Beschichtung verwendeten Substanzen: Sie werden durch die im Knochen zirkulierende Flüssigkeit und den Blutstrom so verdünnt, dass ihre Konzentration die Schwelle der therapeutischen Wirksamkeit unterschreitet und ein reguläres Remodelling langsam wieder möglich wird. Zu diesem Zeitpunkt sind die Implantate jedoch längst gut osseointegriert und Gebrauchsschäden (Mikrocracks), die auf den Knochen wirken, können zeitlich nicht mehr mit Reparaturdefekten kumulieren. Zudem erfolgt die Reparatur langsamer.

Um eventuelle lokale Infektionen ebenfalls bekämpfen zu können oder derartigen Infektionen prophylaktisch vorzubeugen, kann es von Vorteil sein, die vorgenannten Substanzen für die Beschichtung mit einem Antibiotika zu kombinieren. Einzelne der erfindungsgemäß vorgeschlagenen Substanzen sind per se antibiotisch wirksam, z. B. Calciumsulfat, Calciumphosphat und Silber. Daher kann es ausreichen, auch mehrere der genannten Substanzen für die Beschichtung zu kombinieren. '

Eine weitere vorteilhafte Substanz besteht in der Kombination von einem Biphosphonat, beispielsweise Ibandronat, mit einem Antibiotikum, beispielsweise Treacyclin. Die Verwendung von Bafilomycin für sich alleine vermag hingegen beide Wirkungen zu entfalten. Es wirkt in entsprechender Konzentration als Antibiotikum und zugleich als Hemmer des osteonalen Remodellings.

Nach einem weiteren Merkmal der Erfindung schließt sich in Richtung des Implantatfußes an den Halsbereich ein Fußabschnitt an, der wahlweise aus einem zylindrischen mit einem nachfolgenden konischen Fußabschnitt besteht oder in an sich bekannter Weise insgesamt konisch ausgebildet werden kann. Sowohl der zylindrische als auch der konische Fußabschnitt sind mit einem Gewinde versehen, mit dem das Implantat in das Implantatbett im Kieferknochen eingeschraubt wird.

Um den dauerhaften und festen Sitz des Implantates im Kieferknochen weiter zu fördern, ist an das erfindungsgemäße Implantat ein zusätzlicher Endabschnitt angeordnet, der sich an den konischen Fußabschnitt anschließt und vorzugsweise eine profilierte Manteloberfläche, beispielsweise in Form eines Sägezahnprofils, aufweist. Für bestimmte Einsatzfälle, wenn beispielsweise eine ausreichende Knochensubstanz vorhanden ist, kann der Endabschnitt auf einfache Weise an der Sollbruchstelle, über die der Endabschnitt mit dem konischen Fußabschnitt verbunden ist, vom übrigen Implantatkörper abgetrennt werden.

Die Erfindung soll nachstehend an einem Ausführungsbeispiel näher erläutert werden. In der dazugehörigen Zeichnung zeigen:

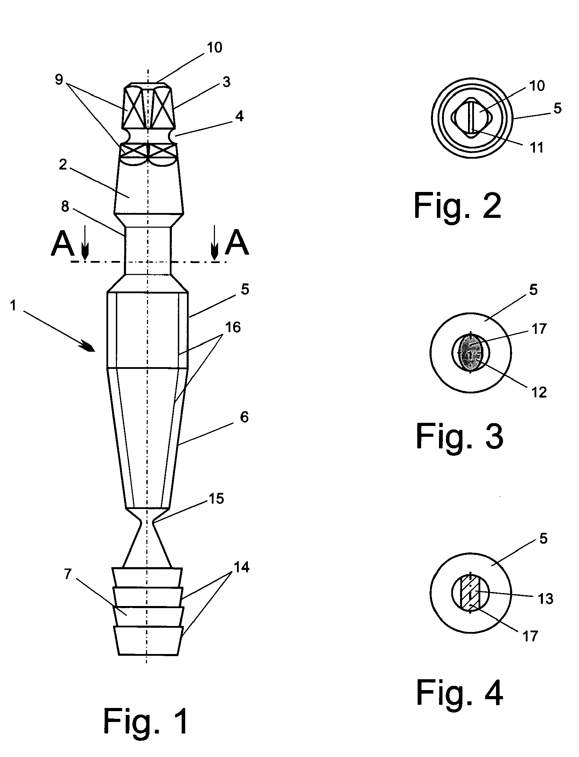

- Fig. 1: die Gesamtansicht des erfindungsgemäßen Schraubimplantates,
- Fig. 2: die Draufsicht auf die Kopffläche des Implantates,
- Fig. 3: vorteilhafte Profilquerschnitte im Halsbereich mit festgelegter Biegelinie.

Das erfindungsgemäße Schraubimplantat 1 ist vorzugsweise mit einem Abutment 2 versehen und besitzt im Bereich des Abutmentkopfes 3 eine Sollbruchstelle 4 mit einem reduzierten Profilquerschnitt. Der Profilquerschnitt dieser Sollbruchstelle 4 ist so gewählt, dass ein eventueller Bruch, der beispielweise durch Auftreten erhöhter Drehmomente beim Inserieren des Schraubimplantates 1 ausgelöst werden kann, an dieser Sollbruchstelle 4 eintritt, bevor ein Bruch im Bereich des biegbaren Halsabschnittes 8 mit reduziertem Profilquerschnitt erfolgt.

Vorzugsweise befindet sich die Sollbruchstelle 4 im Bereich der Schlüsselflächen 9, die zur Aufnahme eines geeigneten Werkzeuges zum Eindrehen des Schraubimplantates 1 dienen. Hierbei ist die Sollbruchstelle 4 so angeordnet, dass die sich von der Kopffläche 10 des Abutmentkopfes ausgehenden Schlüsselflächen 9 unterhalb der Sollbruchstelle 4 fortsetzen und zwischen dem biegbaren Halsabschnitt 8 und der Sollbruchstelle 4 enden.

Im Falle eines Bruches kann das Einbringwerkzeug auf die verbliebenen Schlüsselflächen 9 unterhalb der Sollbruchstelle 4 aufgesetzt und das gebrochene Schraubimplantat 1 auf relativ einfache Weise wieder aus dem Implantatbett herausgedreht werden.

Der reduzierte Profilquerschnitt des biegbaren Halsabschnittes 8 bildet eine Biegezone mit einer im voraus festgelegten Biegelinie, die auf der Kopffläche des Implantats markiert ist und durch das gewählte Profil in der Biegezone bestimmt wird. Nach der vorliegenden Erfindung besitzt die Biegezone ein elliptisches Profil oder die Form eines Steges 13, der beispielsweise durch Fräsen hergestellt worden ist. Die Längsachsen dieser Profile bilden die Biegelinien 10; 11, die durch die Markierung 9 in der Kopffläche 8 angezeigt wird und die bevorzugte Biegerichtung für nachfolgende Biegeoperationen angeben, in der die Bruchgefahr infolge der erfindungsgemäßen Ausbildung des Profilquerschnittes in der Biegezone am geringsten ist.

Die vom Kieferknochen aufzunehmende Implantatbasis wird durch einen Fußabschnitt 4 gebildet, der aus einem zylindrischen Fußabschnitt 5 und einem konischen Fußabschnitt 6 besteht. Abweichend von der dargestellten Ausführung kann der Fußabschnitt 4 auch durch einen insgesamt konischen Fußabschnitt 6 gebildet werden. Sowohl der zylindrische als auch der konische Fußanschnitt sind mit einem Gewinde 16 zum Einschrauben des Implantates 1 in den Kieferknochen versehen.

Die Implantatbasis schließt mit einem Endabschnitt 7 ab, der sich über eine Sollbruchstelle 15 an den konischen Fußabschnitt 6 anschließt und bei Bedarf an der Sollbruchstelle 15 vom übrigen Körper des Implantates 1 abgetrennt werden kann.

Die enossale Oberfläche des Implantates wird nach bekannten Verfahren vorzugsweise mit einer mikroporigen Oberflächenstruktur versehen und nach Reinigung des Implantats eine haftfähige wasser- oder fettlösliche Ibandronat-Lösung aufgetragen, wobei der Wirkstoff in einer Dosierung von 3 bis 8 mg in der Beschichtung auf den enossalen Oberflächen des Implantates vorliegt.

Bei Fortfall der mikroporigen Oberflächenstruktur kann die haftfähige, wasser-oder fettlösliche Ibandronat- Lösung in der angegeben Dosierung auch direkt auf die enossale Oberfläche des Implantates aufgetragen werden. Vorzugsweise wird diese Beschichtung unmittelbar vor der Insertion des Implantates auf die enossalen Oberflächen aufgetragen und nach dem Trocknen der aufgetragenen Schicht das Implantat in die vorbereitete Kavität eingesetzt.

### BEZUGSZEICHENAUFSTELLUNG

- 1: Schraubimplantat
- 2: Abutment
- 3: Abutmentkopf
- 4: Sollbruchstelle
- 5: zylindrischer Fußabschnitt
- 6: konischer Fußabschnitt
- 7: Endabschnitt
- 8: Halsabschnitt
- 9: Schlüsselflächen
- 10: Kopffläche
- 11: Markierung
- 12: Profilquerschnitt in der Biegezone
- 13: Steg
- 14: Sägezahnprofil
- 15: Sollbruchstelle
- 16: Gewinde
- 17: Biegelinie

## Patentansprüche

1. Schraubimplantat (1) mit einem enossalen Gewinde (16), einem sich daran anschließenden Halsabschnitt (8), der eine Biegezone umfasst und einem am Halsabschnitt (8) in einstückiger Form angeschlossenen Abutment (2) zur Aufnahme und Befestigung des Aufbauteiles eines Zahnersatzes oder einer Subkonstruktion, **dadurch gekennzeichnet, dass** der Abutmentkopf (3) eine Sollbruchstelle (4) aufweist.

2. Schraubimplantat nach Anspruch 1, **dadurch gekennzeichnet, dass** der Durchmesser des Profilquerschnittes in der Sollbruchstelle (4) kleiner ist als der kleinste Durchmesser in der Biegezone des Halsabschnittes (8) ist.

3. Schraubimplantat nach Anspruch 1, **dadurch gekennzeichnet, dass** die Sollbruchstelle (4) im Bereich der Schlüsselflächen (9) des Abutments (2) angeordnet ist.

4. Schraubimplantat nach Anspruch 1, **dadurch gekennzeichnet, dass** unterhalb der Sollbruchstelle (4) ebenfalls Schlüsselflächen (9) vorgesehen sind und diese Schlüsselflächen (9) zwischen der Sollbruchstelle (4) und dem Halsabschnitt (8) enden.

5. Schraubimplantat nach Anspruch 1, **dadurch gekennzeichnet, dass** die Biegezone einen elliptisch, oval ausgebildeten Profilquerschnitt (12) mit einer vorbestimmten Biegelinie (17) besitzt, wobei der kleinste Durchmesser im Profilquerschnitt (12) kleiner ist als der größte Durchmesser das Gewindes (16)) und die Biegelinie (17) durch die Profilgeometrie des Profilquerschnittes bestimmt ist.

6. Schraubimplantat nach Anspruch 1, **dadurch gekennzeichnet, dass** die Biegelinie (17) auf der Kopffläche (10) des Implantates (1) durch eine Markierung (11) abgebildet ist und sich an die Biegezone ein Fußabschnitt anschließt, der aus einem zylindrischen Fußabschnitt (5) und einem konischen Fußabschnitt (6) besteht und mit einem Endabschnitt (7) abschließt.

7. Schraubimplantat nach Anspruch 1 und 6, **dadurch gekennzeichnet, dass** der zylindrische Fußabschnitt (5) und der konische Fußabschnitt (6) mit einem Gewinde (16) versehen ist.

8. Schraubimplantat nach Anspruch 1 und 6, **dadurch gekennzeichnet, dass** der Endabschnitt (7) über eine Sollbruchstelle (15) abtrennbar mit dem Fußabschnitt (4) verbunden ist.

9. Schraubimplantat nach Anspruch 1 und 8, **dadurch gekennzeichnet, dass** der Endabschnitt (7) eine profilierte Oberflächenstruktur, vorzugsweise ein Sägezahnprofil (14), aufweist.

10. Schraubimplantat nach Anspruch 1und 8, **dadurch gekennzeichnet, dass** der Fußabschnitt (4) ein konischer Fußabschnitt (6) ist.

11. Schraubimplantat nach Anspruch 1 und 6, **dadurch gekennzeichnet, dass** der Profilquerschnitt (12) in der Biegezone elliptisch ausgeformt ist und die Längsachse der Ellipse die vorbestimmte Biegelinie (17) ist.

12. Schraubimplantat nach Anspruch 1 und 6, **dadurch gekennzeichnet, dass** der Profilquerschnitt in der Biegezone ein Steg (13) und die vorbestimmte Biegelinie (17) die Längsachse des Steges (12) ist.

13. Schraubimplantat nach Anspruch 1, **dadurch gekennzeichnet, dass** auf den enossalen Flächen des Implantates (1) eine Beschichtung, deren Subtanzen Wirkstoffe enthalten, die im Bereich der lmplantationsosteotomie das osteonale Remodelling des Kieferknochens verzögern, aufgetragen ist.

14. Schraubimplantat nach Anspruch 1 und 13, **dadurch gekennzeichnet, dass** der Wirkstoff in der Beschichtung aus der Gruppe der Biphosphonaten ausgewählt ist und die Beschichtung vorzugsweise Etidronat, Clodronate, Tiludronat, Pamidronat, Alendronat, Risedroant, Ibandronat, Zoledronat oder deren Kombinationen als wirksame Substanz enthält.

15. Schraubimplantat nach Anspruch 1 und 13, **dadurch gekennzeichnet, dass** der Wirkstoff in der Beschichtung aus der Gruppe der Östrogene ausgewählt ist und die Beschichtung vorzugsweise, TGF-beta, Galluim-Nitrat, Plicamycin, Calcitriol, Calcetonin, Bafilomycin oder deren Kombinationen als wirksame Substanz enthält.

16. Schraubimplantat nach Anspruch 1 und13, **dadurch gekennzeichnet, dass** der Wirkstoff in der Beschichtung aus der Gruppe der im Knochen vorkommenden Bausubstanzen oder Salze des Knochens ausgewählt ist.

17. Schraubimplantat nach Anspruch 1 und 16, **dadurch gekennzeichnet, dass** der Wirkstoff in der Beschichtung in einer Konzentration vorliegt, die über der normalen physiologischen Konzentration des jeweiligen Wirkstoffs in Bezug auf die Blutkonzentration liegt.

18. Schraubimplantat nach Anspruch 1 und 16, **dadurch gekennzeichnet, dass** die Beschichtung aus Kochsalz besteht.

19. Schraubimplantat nach Anspruch 1 und 16, **dadurch gekennzeichnet, dass** die Beschichtung eine Kalciumverbindung enthält.

20. Schraubimplantat nach Anspruch 1 und 16, **dadurch gekennzeichnet, dass** die Beschichtung Kalciumphosphat oder Kalciumsulphat enthält.

21. Schraubimplantat nach Anspruch 1 und 13, **dadurch gekennzeichnet, dass** die Beschichtung Silber in einer annähernd reinen Form enthält und dieses Silber eine Partikelgröße von 0.001 - 0.01 Mikron besitzt.

22. Schraubimplantat nach Anspruch 1, 13, 16, und 21, **dadurch gekennzeichnet, dass** die mikrotherapeutisch wirksamen Substanzen der Beschichtung mit antibiotisch wirksamen Substanzen kombiniert sind.

23. Schraubimplantat nach einem der Ansprüche 1 bis 22, **dadurch gekennzeichnet, dass** die Beschichtung ein Antibiotikum enthält, das in der ausgewählten Konzentration zugleich das osteonale Remodelling hemmt.
